# EUROPEAN PATENT SPECIFICATION

(11) **EP 3 682 659 B1**
(45) Date of publication and mention of the grant of the patent: **07.08.2024**
(21) Application number: 18769709.9
(22) Date of filing: 14.09.2018
(51) Int. Cl.: H04W 12/06, H04W 12/02, H04W 12/065, G06F 21/32, G05B 19/00, G06F 21/44, G06F 21/57, G06V 10/143, G06V 20/00, G06V 40/16, G06V 40/40

(54) **USER AUTHENTICATION CONTROL USING ULTRASOUND**
BENUTZERAUTHENTIFIZIERUNGSSTEUERUNG MITTELS ULTRASCHALL
COMMANDE D'AUTHENTIFICATION D'UTILISATEUR À L'AIDE D'ULTRASONS

(30) Priority: 15.09.2017 US 201762559214 P; 02.11.2017 NO 20171742
(43) Date of publication of application: 22.07.2020
(73) Proprietor: Elliptic Laboratories ASA, 0182 Oslo (NO)
(72) Inventor: DANIELSEN, Laila, El Cerrito California 94530 (US); HUSSMANN, Holger, 3140 Nøtterøy (NO); STRUTT, Guenael Thomas, San Francisco California 94133 (US)
(74) Representative: Bryn Aarflot AS
(86) International application number: PCT/EP2018/074956
(87) International publication number: WO 2019/053220

(56) References cited:
- EP-A1- 3 118 763
- EP-A1- 3 156 978
- EP-A2- 2 820 536
- WO-A1-2015/149882
- US-A1- 2012 286 929

## Description

### Technical Field

Present teachings relate to user recognition for an electronic device.

### Background Art

A number of authentication technologies exist for authenticating a rightful user of an electronic device, including fingerprint sensing, iris scan, password or pin code, voice recognition, and facial recognition, or recognition based on any other unique characteristics of the rightful user. When using most of these technologies there is a certain delay associated with the authenticating process. In addition to this, there might be delay associated with the start of the authenticating process. In fingerprint scanning system on a mobile device, for example, the user pressing the home button of the mobile device might be used to trigger the authenticating process.

In certain authentication systems, such as facial recognition based authentication systems, especially those without a dedicated button, the electronic device such as a mobile device must determine when to trigger the authentication process. Such a trigger may be a lift to wake function, or another process initiated by the user of the mobile device. Another option could be to activate the facial recognition system at regular intervals to detect a user, but this can lead to high power consumption of the device even if the intervals are infrequent. In addition, the triggering of the authentication process may be unreliable such that the user experience is affected. The authentication process is unreliable if the triggering system does not initiate the authentication process, even though the process should have been initiated. In such conditions the user may experience undesired delays in unlocking their device. Even in devices with a button or other mechanism for waking the electronic device, the authentication process may introduce a delay in providing access to the rightful user especially if the processes associated with the authentication need to be loaded and executed after the user engages the button or other mechanism on the device for requesting access.

The prior art is known from EP 3 156 978 A1 which deals with detecting liveness of a subject based on ultrasound signal and from US 2012/286929 A1 which deals with the inlocking of a user device based on proximity to a previously paired accessory.

### Summary

At least some problems inherent to the prior-art will be shown solved by the features of the accompanying independent claims.

Viewed from a first aspect a method for estimating the position and/or movement of an object is provided. In one embodiment, the present teachings can provide a method for initiating an authentication process on an electronic device, the method comprising transmitting an ultrasound signal from an ultrasound transmitter, generating a measured signal by receiving at an ultrasound receiver an echo of the ultrasound signal being reflected by an object, analyzing the echo by processing the measured signal, and initiating the authentication process on the electronic device based on the processing of the measured signal.

According to an embodiment, the method comprises computing a distance value by the processing of the measured signal, said distance value being relative to the distance between the object and the electronic device.

As will be appreciated, the transmitter and receiver may either be different components or alternatively can be the same transducer being used in a transmit mode for transmitting the ultrasound signal and then in a receive mode for receiving the reflected ultrasound signal. If the transmitter and receiver are different components, they may be placed in the same location, or they may be installed at different locations on the electronic device. Furthermore, the electronic device may comprise a plurality of transmitters and/or a plurality of receivers. Multiple transmitter-receiver combinations may be used to extract spatial information related to the object and/or surroundings.

The processing of the measured signal can be done by a processing unit such as a computer processor.

The electronic device may be any device, mobile or stationary, which is required to authenticate the user. Accordingly, devices such as mobile phones, smartwatches, tablets, voice assistants, smart speakers, notebook computers, desktop computers, and similar devices fall within the ambit of the term electronic device. In addition, devices such as vending machines, automobiles, gates, doors, home appliances, and other kinds of electronic access systems that require electronic authentication also fall within the ambit of the term.

In some cases, a hand of the user may be considered an object. Alternatively, if a user is considered an object, the hand may be considered as a part of the object. In other cases, the hand and the rest of the user's body may be considered different objects, given the range and/or sensitivity of the field of view of the ultrasound transmitter/receiver combination. The range and/or sensitivity may either be limited according to component specifications, or it may be statically or dynamically set to a certain values according to processing requirements. Accordingly, the range the and/or sensitivity may be adjusted in one or more scenarios such as: adapting to input objects of different sizes, received signal strength or quality of the signal received by one or more receivers, amount of noise in the surroundings or varying signal-to-noise ("SNR") conditions, etc.

The authentication process is preferably facial recognition system; however, the teachings may also be applied to other kinds of authentication processes, for example, voice recognition.

According to an embodiment, the authentication process is initiated when the computed distance value is shorter than a distance threshold value. According to another embodiment, the method may also comprise estimating a movement of the object relative to the electronic device by transmitting a stream of ultrasound signals and by computing a trajectory of the object by combining the computed distance values associated with a stream of reflected ultrasound signals from the object. In other words, the stream or sequence of transmitted ultrasound signals results in a stream or sequence of ultrasound signals reflected from the object, for each reflected signal in the stream of ultrasound signals received by the receiver, a corresponding measured signal is generated, thereby resulting in a stream of measured signal values. The stream of measured signals can be used to estimate the trajectory of the object. The estimated trajectory may also be used to compute a projected trajectory of the object, the projected trajectory being a probabilistic estimate of the future movement of the object based upon the estimated trajectory. According to an embodiment, the initiation of the authentication process is done on the basis of the estimated trajectory and/or the projected trajectory of the object. In such case, the method may comprise computing of a confidence value. The confidence value can be related to the probability that the user is going to use the electronic device. The confidence value may be generated based upon one or more of the characteristics of the movement. The authentication process may be initiated if the confidence value is larger than a confidence value threshold.

Accordingly, the authentication process may be, preloaded or prepared for execution, or even triggered based on, one or more of: the computed distance value being shorter than a distance threshold value, the confidence value being equal to or higher than a predetermined confidence value threshold, the estimated trajectory intersecting a predetermined distance range threshold value from the electronic device. As can be appreciated any of the said confidence value, said predetermined distance range threshold value, and distance threshold value may be static or dynamic values. As will be appreciated, the predetermined distance range comprises straight line distances from the electronic device and can be understood to represent a field of view ("FoV") of the transmitter/receiver arrangement of the electronic device. The transmitter/receiver arrangement may be termed a proximity sensing arrangement. The FoV hence represents an invisible envelope or space around the electronic device within which a detection of the presence of the object can be used to preload or trigger the authentication process. In certain cases, the FoV may represent a detection range of the proximity sensing arrangement, i.e., the range or free space (in air) within which the proximity sensing arrangement is able to detect an object. The predetermined distance range can thus be equal to or shorter than the FoV of the proximity sensing arrangement. In either case, the FoV or the predetermined distance range can either be a regular or an irregular envelope. By regular it is meant that each straight-line distance from the electronic device to the boundary of the FoV or the predetermined distance range has an equal value. A resulting envelope will thus resemble a spherical shape. By irregular it is meant that at least some of the straight line distances from the electronic device to the boundary of the FoV or the predetermined distance range have an unequal value. The resulting FoV or the predetermined distance range thus can have any 3-dimensional shape.

It will be understood that the terms such as envelope and shape are here used to help the reader visualize a free space (in air) around the electronic device representing the region within which the proximity sensing arrangement can detect an object. Such a region or envelope in free space can have different boundaries or limits dependent upon, e.g., the size of the object and the signal-to-noise ratio at a particular time when a detection is being made. It will further be understood that in some cases the FoV may be limited to be intentionally shorter than the maximum possible limit, for example, to limit the range within which objects should be detected. Such aspects relate to signal processing and are thus not limiting to the generality or scope of the present teachings.

The characteristics of the movement include the speed of the object, the direction of the object, and the size of the object. In some cases, different reflections may be received from different parts of the object. If the object is the user, the ultrasound receiver may receive reflections from different parts of the user's body, for example, the user's hand and the user's face. Accordingly, the method may comprise measuring the relative position and/or movement of the different parts of the object for computing the confidence value, or improving a previously computed confidence value. If required, the method can also comprise tracking the relative movements of different parts of the object.

According to another embodiment, the method comprises recognizing a movement gesture executed at least by a part of the object for initiating the authentication process. A predetermined gesture may be used by the user to wake up the device and/or to initiate the authentication process.

The threshold value may either be a fixed value, or it may be a dynamic value based upon the use case of the electronic device. Some non-limiting examples of the use cases threshold values are provided later in this disclosure.

According to another embodiment, the method also comprises transmitting data related to the object to another electronic module of the electronic device. The object related data may include one or more of: object position, distance, speed, estimated trajectory, and projected trajectory. Another electronic module may be a hardware or software module, and may include any one or more of, application programming interface ("API"), and sensor fusion module. For example, data related to either one or any of, distance, speed of movement, position, and gesture type may be transmitted to a facial recognition algorithm.

According to another embodiment, the method comprises receiving data from at least one of the other sensors or modules in the electronic device for improving the robustness of the initiation of the authentication process. The other sensors or modules may include, accelerometer, inertial sensor, IR sensor, or any other sensor or modules related to a sensor fusion module in the electronic device.

As will be appreciated, the method can be used for initiating the authentication process not only based upon a measurement of the reflected signal or echo from an object facing the screen of the electronic device, but also from an object that is located on a side of the electronic device. Accordingly, the method can provide for the initiation of the authentication process if the object approaches one of the sides of the electronic device. Hence, a wider sensitivity space is achieved for initiating the authentication process, which can save precious time for unlocking the electronic device. A smoother and more seamless user experience may thus be achieved. Or more generally, it can be said that the method can provide for the initiation of the authentication process within the FoV of the electronic device. Furthermore, if the proximity sensing arrangement provided is such that the FoV of the proximity arrangement surrounds the most of or entire electronic device, the authentication process may be initiated by the object approaching the electronic device from almost any direction. This may be achieved either by placing, for example the receiver at such a position on the electronic device such that it may receive the received signal being reflected from almost any direction within a wide area around the electronic device, or by providing multiple receivers and or transmitters around the electronic device. It will be appreciated that a wide FoV can be desirable in devices such as voice assistants and smart speakers.

According to another aspect of the present teachings, a method for maintaining an authenticated state of an object can be provided, the method comprises receiving a confirmation signal from an authentication module of an electronic device confirming that the object is a rightful user of the electronic device, initiating a tracking phase for tracking the object by using a stream of transmitted ultrasound signals transmitted from an ultrasound transmitter, analyzing a stream of echoes received by an ultrasound receiver, the stream of echoes being reflections of the stream of ultrasound signals analyzing the corresponding stream of echoes received by an ultrasound receiver, computing a probability value related to the object being the rightful user by analyzing the stream of echoes. The method further comprises preventing the electronic device from going into a locked state if the probability value is higher than a first probability threshold value. The probability value can be related to the distance of the object from the electronic device. Accordingly, if the object or user moves beyond a distance value threshold from the electronic device, the electronic device may enter a locked state requiring a user to authenticate before using the electronic device. According to yet another embodiment, if a plurality of objects or users are detected during the tracking, the probability value may be lowered based upon the certainty with which the tracking is able to distinguish the rightful user from the plurality of objects. The probability may also be lowered if a conflict is detected in the received echoes. According to yet another embodiment, the method comprises configuring the electronic device into the locked state if the probability value is lower than a second probability threshold. The first probability threshold and the second probability threshold may be either different values or a same value. It will be appreciated; having different first and second probability threshold values might be desirable for achieving hysteresis. The present teachings may therefore also enable on-body detection for mobile devices, where the mobile device may not be required to enter a locked state as long as the rightful user has once authenticated themselves and has subsequently not left the vicinity of the mobile device. Such conditions might for example be, if the mobile device is in a pocket of the authenticated user.

The term authenticated user is a user who has been successfully authenticated (undergone the user authentication process) to access the electronic device. The term rightful means a user who when authenticated would have access to the electronic device. The terms authenticated user and rightful user may be used interchangeably in this disclosure, but their context, as to whether such user has already been authenticated or not, will be apparent from the pertaining discussion.

The locked state may be a state in which an unauthenticated user is prevented from performing any function on the electronic device, or it may be a state in which the unauthenticated user is prevented from performing a subset of the functions available on the electronic device. The subset of the functions may include high-privacy notifications and detailed notifications. In other words, the locked state may be a state in which an unauthenticated user is allowed to perform low-privacy functions on the electronic device. The low-privacy functions or functions associated with a low privacy state, may include any one or more of, adjusting volume, controlling playback of music or video, declining incoming calls, making emergency calls, switching off the electronic device, and such non-critical functions.

Accordingly, present teachings can allow for the electronic device to remain in an unsecured or low-privacy state while it is unlocked. This can prevent the requirement of unlocking the electronic device repeatedly even in secure surroundings, and thus provide a smoother user experience by saving time and provider quicker access. The electronic device is switched to a high-privacy state while it is locked. Thus, the rightful user can trust that private information will not be visible to others once the rightful user is no longer in the vicinity of the electronic device.

In certain embodiments, if an another user approaches or enters within a predetermined secure range distance from the electronic device while the rightful user is present within a user range distance of the electronic device, the electronic device is switched to a high-privacy state, e.g., the device is locked. The predetermined secure range distance may either be equal to the user range distance value or they may be different distance values. For example, the predetermined secure range distance value may be greater than the user range distance value for a higher privacy setting, the predetermined secure range distance value may be equal to the user range distance value for a medium privacy setting, while the predetermined secure range distance value may be smaller than the user range distance value for a lower privacy setting.

The privacy setting may be set high, medium or low, either manually by the rightful user, or it may be automatic based upon whether the another user has been identified as an authenticated another user to whom the rightful user has provided privacy rights for the electronic device. In certain cases, the authenticated another user may have the same rights as the rightful user, in such cases the predetermined secure range distance value is zero or disabled for the another user that has been identified and has been provided the same rights by the rightful user.

According to an aspect, in the high privacy setting, the authenticated another user may have the same rights as an unauthenticated user.

It should be noted that the specifics of what is available or not available in a privacy state is not limiting to the scope or generality of the present teachings. A skilled person will understand that privacy states may be designed according to desired security or privacy profile.

It will be appreciated that it can be advantageous for the above automatic privacy settings that authentication, at least for the another user, can be done when the another user is outside the predetermined secure range distance from the electronic device. Accordingly, in such cases authentication schemes such as voice recognition may be more suitable either alone or in combination with other kinds of authentication scheme, such as facial recognition.

In cases when the electronic device is a part of a functionally linked plurality of electronic devices of the same or different type, a successful authentication of the another user performed by an another electronic device in the plurality of electronic devices may be used to validate the another user for access and/or controlling privacy settings on the electronic device, as the another user moves from the user range distance or even secure range distance of the another electronic device towards the electronic device. Accordingly, the authenticated another user, who has already been authenticated by a first electronic device having a first user range, may move from the first user range into a second user range associated with a second electronic device without requiring to be authenticated by the second electronic device. It will be appreciated that the authenticated another user should be trackable during transitioning from the first user range into the second user range. It may be done, e.g., by the first user range being at least partially overlapping the second user range. It will be understood that the first user range and the second user range represent the free space surrounding the first electronic device and second electronic device respectively, within which space the probability value associated with a sole authenticated user present in that space is higher than the first probability threshold value.

In some embodiments, transitions between the locked state or high-privacy state and the unlocked state or low-privacy state are achieved using distinct probability thresholds. This may allow for the electronic device to be unlocked while being in a high-privacy state.

Thus, from the above, it can be more generally said that the privacy state of the electronic device is changed or switched in response to the distance value of the rightful user from the electronic device. Accordingly, if the rightful user moves beyond the distance value threshold from the electronic device, the privacy state on the electronic device is changed. Or it can also be said that the privacy state on the electronic device is changed in response to the probability value, e.g., if the probability value is lower than a second probability threshold value, a subsequent user (the user, or the another user) is thus required to authenticate before using the electronic device. Similarly, the electronic device is adapted to switch its privacy state in response to the another user arriving within a predetermined another user distance from the electronic device, while the rightful user is present within the user range distance. The predetermined another user distance value can be the predetermined secure range distance value, or it can be the user range distance value. The privacy state may be selected from any one of the: high-privacy state, medium privacy state or low privacy state, each being associated with varying amount of user privileges for performing user functions on the electronic device. The privacy states may be any number of states greater than one.

The threshold values may either be static or they may be dynamic. Using dynamic values may be preferable based on the use. For example, a threshold value for a given parameter for on-body detection can be different from a threshold value for the same parameter in another mode. The distance threshold, for example, may range from a sub-centimeter to several meters. The range of detection is dependent on the component specifications and power consumption, so any distance values should not be considered limiting to the generality of the present teachings.

The processing of the echo signals may be based on time of flight ("TOF") measurements between the transmitted ultrasound signal and the corresponding measured signal. The processing of the echo signals may also be based on the amplitude of the measured signal, or phase difference between the transmitted signal and the measured signal, or the frequency difference between the transmitted signal and the measured signal, or a combination thereof. The transmitted ultrasound signal may comprise either a single frequency or a plurality of frequencies. In another embodiment, the transmitted ultrasound signal may comprise chirps.

The method steps are preferably implemented using a computing unit such as a computer or a data processor.

Viewed from another aspect, the present teachings can also provide an electronic device implementing the embodiments or any of the method steps discussed above. More specifically, an electronic device can be provided, the electronic device comprising an ultrasound system adapted to initiate an authentication process on the electronic device, wherein the ultrasound system comprises
an ultrasound transmitter configured to transmit an ultrasound signal,
an ultrasound receiver configured to receive an echo of the ultrasound signal, the ultrasound receiver also being configured to generate a measured signal relative to the echo, and
a processing unit configured to analyze the echo by processing the measured signal, wherein
the processing unit is configured to initiate the authentication process on the electronic device based on the processing of the measured signal.

The processing unit can be any type of computer processor, such as a DSP, an FPGA, or an ASIC. The processing unit may further comprise a machine learning module. The processing unit may also comprise an artificial intelligent processor.

Viewed from another aspect, the present teachings can also provide an electronic device comprising an ultrasound system adapted to maintain an authenticated state on the electronic device, wherein the ultrasound system comprises
an ultrasound transmitter configured to transmit an ultrasound signal,
an ultrasound receiver configured to receive an echo of the ultrasound signal, the ultrasound receiver also being configured to generate a measured signal relative to the echo, and
a processing unit configured to analyze the echo by processing the measured signal, wherein
the processing unit is configured to retain the electronic device in the authenticated state based on the processing of the measured signal.

Viewed from yet another aspect, the present teachings can also provide a computer software product for implementing any method steps disclosed herein. Accordingly, the present teachings also relate to a computer readable program code having specific capabilities for executing any method steps herein disclosed. In other words, the present teachings relate also to a non-transitory computer readable medium storing a program causing an electronic device to execute any method steps herein disclosed.

Example embodiments are described hereinafter with reference to the accompanying drawings.

### Brief description of drawings

- FIG. 1: shows a flowchart illustrating a method for initiating an authentication process of an electronic device
- FIG. 2: shows a flowchart illustrating a method for maintaining an authenticated state of an electronic device

### Detailed description

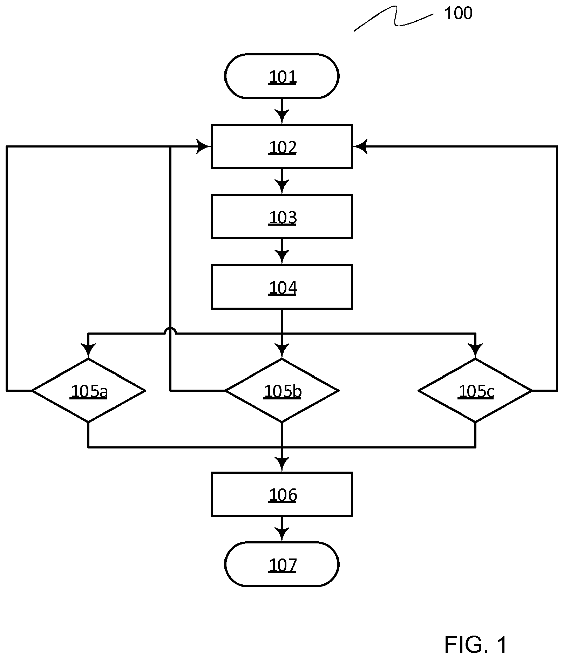

FIG. 1 shows a flowchart 100 illustrating a method for initiating an authentication process on an electronic device. Upon start 101, as a first step 102, an ultrasound signal is transmitted by an ultrasound transmitter. In a following step 103, an echo signal of the ultrasound signal is received by an ultrasound receiver. If an object is present in the field of view of the ultrasound transmitter and receiver, the echo signal will comprise at least one echo reflected by the object. The ultrasound receiver generates a measured signal relative to the received echo signal. In a following step 104, the echo signal is analyzed by processing the measured signal. The processing is performed by a computer processor. During processing, the processor extracts parameters related to the object. The parameters include one or more of: distance, position, speed, direction, movement, or type or gesture performed by the object. One or more of said parameters are evaluated against predetermined thresholds or criteria associated with each of the evaluated parameters. This is shown as a plurality of steps 105. Three evaluations, 105a, 105b and 105c are shown in the figure, however the evaluations may be more or fewer than those shown. Furthermore, the evaluation steps may be performed concurrently or sequentially to each another. The evaluation steps may even be performed selectively, i.e., some evaluations may be performed according to requirement.

As an example, the first evaluation 105a could be comparing a distance value, computed by processing the measured signal, with a predetermined distance threshold value. Similarly, the second evaluation 105b could be comparing a speed value with a predetermined distance threshold value. Similarly, the third evaluation 105c could be comparing a movement pattern with a predetermined database of recognized gestures. It will be understood that for extracting parameters such as speed and movement, a plurality of ultrasound signals and echoes might be required. As a result, the transmitting of the ultrasound signal and receiving of echo includes both cases, i.e., a single pulse and a burst of pulses. The transmitted ultrasound signal might have different profiles, all of which are relevant to this disclosure. For example, the ultrasound signal may comprise chirps. Furthermore, the processing of the measured signal may include one or any of: time of flight measurements, phase shift measurements, amplitude measurements, or frequency shift measurements. The respective threshold values may be static of they may be dynamic. If the distance value is shorter than the predetermined distance threshold value, then in a following step 106, the authentication process is initiated. If, however, the distance value is larger than the predetermined distance threshold value, the method step102 is repeated, i.e., transmitting a new ultrasound signal using the transmitter. The new ultrasound signal may either be similar to the previously transmitted signal or it may be different, for example, dependent upon the processing of the measured signal. In cases for example, where ambient noise beyond a predetermined limit is detected during processing, the ultrasound signal may be altered to achieve a better signal to noise ratio in subsequent measurements. Whether the method step 106 of initiating the authentication process is executed, or the step 102 of transmitting the ultrasound signal is performed, may be decided either individually of any of the evaluation steps 150a-c or in combination, whichever provides a better confidence that the authentication process should be started. A series or stream of measurements either done within steps 102 - 104 or from steps 102 - 105 may also be used to compute one or more of the following: an estimated trajectory of the object, a projected trajectory of the object, measuring/tracking multiple objects, measuring/tracking relative movements of multiple objects or multiple parts of an object.

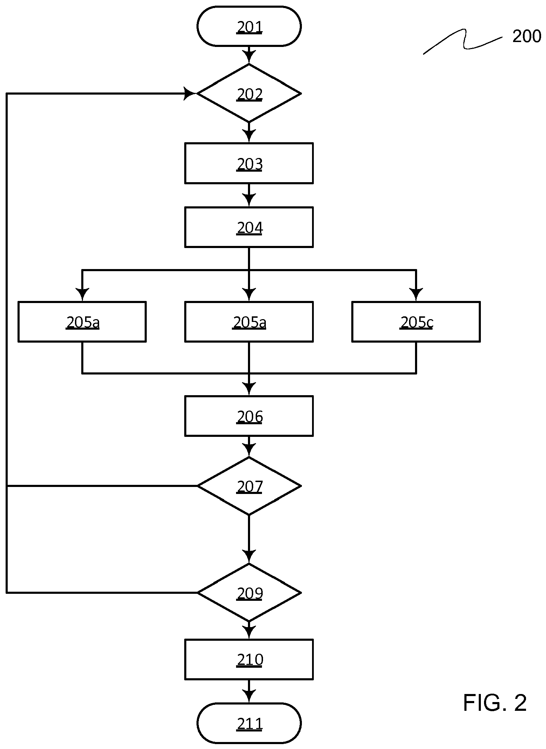

FIG. 2 shows a flowchart 200 illustrating a method for maintaining an authenticated state of an object. As a first step 201, a confirmation signal is received from an authentication module of an electronic device confirming that the object is a rightful user of the electronic device. In an optional following step 203, it can be checked if a locked state has been initiated by any other module, for example by the user themselves by pressing a button, or by another security module. If locked state is not initiated, in step 203, a stream of ultrasound signals is transmitted by an ultrasound transmitter. In a following step 204, a stream of echoes of the transmitted ultrasound signal is received by an ultrasound receiver. The echo stream is analyzed by a processor either as a part of the receiver or a separate module. As discussed previously, the receiver generates a measured signal relative to the echo stream, so the processor performs one or more analysis on the measured signal generated dependent upon the echo stream received by the ultrasound receiver. Based upon said one or more analysis of the measured signal, or echo stream, a probability value is computed, in step 206, by the processor or processing unit. The one or more analyses are shown as steps 205a - c. The probability value may be generated as a result of either one of the evaluation steps 205a - c, or any of their combinations. Three evaluation steps 205a - c are shown, however, the number of evaluation steps may be greater or less than three. The evaluation steps may be performed concurrently, sequentially, or selectively.

As an example, the first evaluation step 205a may be computing a distance of the object from the electronic device. The second evaluation step 205b may be detecting other objects in the field of view. The third evaluation step 205c may be movement of an object.

In a next step, 207, the probability value is compared with a first probability threshold value. If the probability value is higher than the first probability threshold value, there is enough confidence that the object is the authenticated user. In such case the steps 202 and following can be repeated for tracking the object and computing a new probability value. If, however, the probability value is lower than the first probability threshold value, the method as an optional step 209 may compare the probability value with a second probability threshold value. If the probability value is higher than the second probability threshold value, it may be assumed that there is still enough confidence that the object is the authenticated user. In such case, steps 202 - 207 can be repeated for tracking the object and computing a new probability value. If, however, the probability value is lower than the second probability threshold value, it is deemed that there is not enough certainty or confidence than an object detected is the authenticated user. In this case, as a following step 210, the electronic device is brought to a locked state such that user authentication must be performed to unlock the electronic device. In the end step 211, the method can either conclude, or initiate the method for initiating an authentication process as described previously.

Various embodiments have been described above for a method for controlling an authentication process on an electronic device, and for such an electronic device comprising an ultrasound system. Those skilled in the art will understand, however that changes and modifications may be made to those examples without departing from the scope of the following claims and their equivalents. It will further be appreciated that aspects from the method and product embodiments discussed herein may be freely combined.

## Claims

1. A method for initiating an authentication process on an electronic device, the method comprising:
- transmitting a stream of ultrasound signals from an ultrasound transmitter;
- receiving at an ultrasound receiver echoes of the stream of ultrasound signals being reflected by an object;
- for each echo of an ultrasound signal being reflected by the object, generating a measured signal;
- analyzing each echo by processing the measured signal by computing a distance value, said distance value being related to the distance between the object and the electronic device;
- estimating the movement of the object relative to the electronic device by computing a trajectory of the object by combining the computed distance values associated with the stream of reflected ultrasound signals from the object;
- calculating a confidence value based on one or more characteristics of the movement, wherein the confidence value is related to the probability that the user is going to use the electronic device and
- initiating the authentication process on the electronic device when the confidence value is higher than a confidence value threshold.

2. The method according to claim 1, wherein the authentication process is a facial recognition process.

3. The method according to claim 1, wherein the method further comprises
- computing a projected trajectory of the object.

4. The method according to claim 1, wherein the authentication process is initiated when a movement gesture performed by the object is detected.

5. An electronic device comprising an ultrasound system adapted to initiate an authentication process on the electronic device, wherein the ultrasound system comprises
an ultrasound transmitter configured to transmit a stream of ultrasound signals,
an ultrasound receiver configured to receive echoes of the stream of ultrasound signals being reflected by an object;
the ultrasound receiver also being configured to generate a measured signal from each received echo, and
a processing unit configured to analyze each echo by processing the measured signal by computing a distance value , said distance value being related to the distance between the object and the electronic device,
the processing device also being configured to estimate the movement of the object relative to the electronic device by computing a trajectory of the object by combining the computed distance values associated with the stream of reflected ultrasound signals from the object; and
the processing unit is also configured to calculate a confidence value based on one or more characteristics of the movement, wherein the confidence value is related to the probability that the user is going to use the electronic device,
wherein the processing unit is configured to initiate the authentication process on the electronic device when the confidence value is higher than a confidence value threshold.

6. A computer software product having specific capabilities for executing the steps of:
- transmitting an ultrasound signal a stream of ultrasound signals from an ultrasound transmitter
- receiving at an ultrasound receiver echoes of the stream of ultrasound signals being reflected by an object;
- for each echo of an ultrasound signal being reflected by the object, generating a measured signal;
- analyzing each echo by processing the measured signal by computing a distance value, said distance value being related to the distance between the object and the electronic device;
- estimating the movement of the object relative to the electronic device by computing a trajectory by combining the computed distance values associated with the stream of reflected ultrasound signals from the object;
- calculating a confidence value based on sone or more characteristics of the movement, wherein the confidence value is related to the probability that the user is going to use the electronic device and the distance from the device; and
- initiating the authentication process on the electronic device when the confidence value is higher than a confidence value threshold.

## Patentansprüche

1. Verfahren zum Einleiten eines Authentifizierungsvorgangs auf einer elektronischen Vorrichtung, das Verfahren umfassend:
- Senden eines Stroms von Ultraschallsignalen von einem Ultraschallsender;
- Empfangen, an einem Ultraschallempfänger, von Echos des Stroms von Ultraschallsignalen die durch ein Objekt reflektiert werden;
- für jedes Echo eines Ultraschallsignals, das durch das Objekt reflektiert wird, Erzeugen eines gemessenen Signals;
- Analysieren jedes Echos durch Verarbeiten des gemessenen Signals durch Berechnen eines Entfernungswerts, wobei sich der Entfernungswert auf die Entfernung zwischen dem Objekt und der elektronischen Vorrichtung bezieht;
- Schätzen der Bewegung des Objekts in Bezug zu der elektronischen Vorrichtung durch Berechnen einer Trajektorie des Objekts durch Kombinieren der berechneten Entfernungswerte, die mit dem Strom von reflektierten Ultraschallsignalen von dem Objekt verknüpft sind;
- Berechnen eines Konfidenzwerts basierend auf einer oder mehreren Eigenschaften der Bewegung, wobei sich der Konfidenzwert auf die Wahrscheinlichkeit, dass der Benutzer die elektronische Vorrichtung verwenden wird bezieht, und
- Initiieren des Authentifizierungsvorgangs auf der elektronischen Vorrichtung, wenn der Konfidenzwert höher als eine Konfidenzwertschwelle ist.

2. Verfahren nach Anspruch 1, wobei der Authentifizierungsvorgang ein Gesichtserkennungsvorgang ist.

3. Verfahren nach Anspruch 1, wobei das Verfahren ferner umfasst
- Berechnen einer projizierten Trajektorie des Objekts.

4. Verfahren nach Anspruch 1, wobei der Authentifizierungsvorgang initiiert wird, wenn eine Bewegungsgeste, die durch das Objekt durchgeführt wird, erkannt wird.

5. Elektronische Vorrichtung umfassend ein Ultraschallsystem, das angepasst ist, um einen Authentifizierungsvorgang auf der elektronischen Vorrichtung zu initiieren, wobei das Ultraschallsystem umfasst:
einen Ultraschallsender, der konfiguriert ist, um einen Strom von Ultraschallsignalen zu senden,
einen Ultraschallempfänger, konfiguriert ist, um Echos des Stroms von Ultraschallsignalen zu empfangen, die durch ein Objekt reflektiert werden;
wobei der Ultraschallempfänger ebenso konfiguriert ist, um ein gemessenes Signal aus jedem empfangenen Echo zu erzeugen, und
eine Verarbeitungseinheit konfiguriert ist, um jedes Echo durch Verarbeitung des gemessenen Signals durch Berechnen eines Entfernungswerts zu analysieren, wobei sich der Entfernungswert auf die Entfernung zwischen dem Objekt und der elektronischen Vorrichtung bezieht,
wobei die Verarbeitungsvorrichtung ebenso konfiguriert ist, um die Bewegung des Objekts in Bezug zu der elektronischen Vorrichtung durch Berechnen einer Trajektorie des Objekts durch Kombinieren der berechneten Entfernungswerte, die mit dem Strom von reflektierten Ultraschallsignalen von dem Objekt verknüpft sind, abzuschätzen; und
die Verarbeitungseinheit ebenso konfiguriert ist, um einen Konfidenzwert basierend auf einer oder mehreren Eigenschaften der Bewegung zu berechnen, wobei sich der Konfidenzwert auf die Wahrscheinlichkeit bezieht, dass der Benutzer die elektronische Vorrichtung verwenden wird,
wobei die Verarbeitungseinheit konfiguriert ist, um den Authentifizierungsvorgang auf der elektronischen Vorrichtung zu initiieren, wenn der Konfidenzwert höher als eine Konfidenzwertschwelle ist.

6. Computersoftwareprodukt, das spezifische Fähigkeiten zum Ausführen der Schritte aufweist:
- Senden eines Ultraschallsignals eines Stroms von Ultraschallsignalen von einem Ultraschallsender:
- Empfangen, an einem Ultraschallempfänger, von Echos des Stroms von Ultraschallsignalen die durch ein Objekt reflektiert werden;
- für jedes Echo eines Ultraschallsignals, das durch das Objekt reflektiert wird, Erzeugen eines gemessenen Signals;
- Analysieren jedes Echos durch Verarbeiten des gemessenen Signals durch Berechnen eines Entfernungswerts, wobei sich der Entfernungswert auf die Entfernung zwischen dem Objekt und der elektronischen Vorrichtung bezieht;
- Schätzen der Bewegung des Objekts in Bezug zu der elektronischen Vorrichtung durch Berechnen einer Trajektorie durch Kombinieren der berechneten Entfernungswerte, die mit dem Strom von reflektierten Ultraschallsignalen von dem Objekt verknüpft sind;
- Berechnen eines Konfidenzwerts basierend auf einer oder mehreren Eigenschaften der Bewegung, wobei sich der Konfidenzwert auf die Wahrscheinlichkeit, dass der Benutzer die elektronische Vorrichtung verwenden wird und der Entfernung von der Vorrichtung bezieht; und
- Initiieren des Authentifizierungsvorgangs auf der elektronischen Vorrichtung, wenn der Konfidenzwert höher als eine Konfidenzwertschwelle ist.

## Revendications

1. Procédé d'initiation d'un processus d'authentification sur un dispositif électronique, le procédé comprenant :
- la transmission d'un flux de signaux ultrasonores à partir d'un émetteur d'ultrasons ;
- la réception au niveau d'un récepteur d'ultrasons d'échos du flux de signaux ultrasonores qui sont réfléchis par un objet ;
- pour chaque écho d'un signal ultrasonore qui est réfléchi par l'objet, la génération d'un signal mesuré ;
- l'analyse de chaque écho par traitement du signal mesuré par calcul d'une valeur de distance, ladite valeur de distance étant liée à la distance entre l'objet et le dispositif électronique ;
- l'estimation du mouvement de l'objet par rapport au dispositif électronique par calcul d'une trajectoire de l'objet par combinaison des valeurs de distance calculées associées au flux de signaux ultrasonores réfléchis à partir de l'objet ;
- le calcul d'une valeur de confiance en fonction d'une ou plusieurs caractéristiques du mouvement, dans lequel la valeur de confiance est liée à la probabilité que l'utilisateur va utiliser le dispositif électronique, et
- l'initiation du processus d'authentification sur le dispositif électronique lorsque la valeur de confiance est supérieure à un seuil de valeur de confiance.

2. Procédé selon la revendication 1, dans lequel le processus d'authentification est un processus de reconnaissance faciale.

3. Procédé selon la revendication 1, dans lequel le procédé comprend en outre
- le calcul d'une trajectoire projetée de l'objet.

4. Procédé selon la revendication 1, dans lequel le processus d'authentification est initié lorsqu'un geste de mouvement effectué par l'objet est détecté.

5. Dispositif électronique comprenant un système à ultrasons configuré pour initier un processus d'authentification sur le dispositif électronique, dans lequel le système à ultrasons comprend
un émetteur d'ultrasons configuré pour transmettre un flux de signaux ultrasonores,
un récepteur d'ultrasons configuré pour recevoir des échos du flux de signaux ultrasonores qui sont réfléchis par un objet ;
le récepteur d'ultrasons étant également configuré pour générer un signal mesuré à partir de chaque écho reçu, et
une unité de traitement configurée pour analyser chaque écho par traitement du signal mesuré par calcul d'une valeur de distance, ladite valeur de distance étant liée à la distance entre l'objet et le dispositif électronique,
le dispositif de traitement étant également configuré pour estimer le mouvement de l'objet par rapport au dispositif électronique par calcul d'une trajectoire de l'objet par combinaison des valeurs de distance calculées associées au flux de signaux ultrasonores réfléchis à partir de l'objet ; et
l'unité de traitement est également configurée pour calculer une valeur de confiance en fonction d'une ou plusieurs caractéristiques du mouvement, dans lequel la valeur de confiance est liée à la probabilité que l'utilisateur va utiliser le dispositif électronique,
dans lequel l'unité de traitement est configurée pour initier le processus d'authentification sur le dispositif électronique lorsque la valeur de confiance est supérieure à un seuil de valeur de confiance.

6. Produit logiciel informatique ayant des capacités spécifiques pour exécuter les étapes consistant à :
- transmettre un signal ultrasonore un flux de signaux ultrasonores à partir d'un émetteur d'ultrasons :
- recevoir au niveau d'un récepteur d'ultrasons des échos du flux de signaux ultrasonores qui sont réfléchis par un objet ;
- pour chaque écho d'un signal ultrasonore qui est réfléchi par l'objet, générer un signal mesuré ;
- analyser chaque écho par traitement du signal mesuré par calcul d'une valeur de distance, ladite valeur de distance étant liée à la distance entre l'objet et le dispositif électronique ;
- estimer le mouvement de l'objet par rapport au dispositif électronique par calcul d'une trajectoire par combinaison des valeurs de distance calculées associées au flux de signaux ultrasonores réfléchis à partir de l'objet ;
- calculer une valeur de confiance en fonction d'une ou plusieurs caractéristiques du mouvement, dans lequel la valeur de confiance est liée à la probabilité que l'utilisateur va utiliser le dispositif électronique et à la distance qui le sépare du dispositif ; et
- initier le processus d'authentification sur le dispositif électronique lorsque la valeur de confiance est supérieure à un seuil de valeur de confiance.
